# EUROPÄISCHE PATENTSCHRIFT

(11) **EP 0 523 052 B1**
(45) Veröffentlichungstag und Bekanntmachung des Hinweises auf die Patenterteilung: **27.04.1994**
(21) Anmeldenummer: 91903277.1
(22) Anmeldetag: 02.02.1991
(51) Int. Cl.: B62D 25/16

(54) **KOTFLÜGEL AUS KUNSTSTOFF FÜR KRAFTFAHRZEUGE**
PLASTIC WING FOR MOTOR VEHICLES
AILE DE VEHICULES A MOTEUR EN MATIERE PLASTIQUE

(30) Priorität: 31.03.1990 DE 4010453
(43) Veröffentlichungstag der Anmeldung: 20.01.1993
(73) Patentinhaber: AUDI AG, 85045 Ingolstadt (DE)
(72) Erfinder: HALDENWANGER, Günther, D-8070 Ingolstadt (DE); ROTTE, Manfred, D-8070 Ingolstadt (DE)
(74) Vertreter: Engelhardt, Harald
(86) Internationale Anmeldenummer: EP9100196
(87) Internationale Veröffentlichungsnummer: WO9115392

(56) Entgegenhaltungen:
- DE-A- 3 007 760
- FR-A- 2 360 459
- FR-A- 2 594 400

## Beschreibung

Die Erfindung bezieht sich auf einen Kotflügel aus Kunststoff für Kraftfahrzeuge gemäß dem Oberbegriff des Patentanspruchs 1.

Kotflügel aus Kunststoff sind beispielsweise aus der DE-A-3 007 760 bekannt. Zu ihrer Befestigung werden in der Praxis wie bei Kotflügeln aus Stahlblech Schrauben verwendet, welche ein leichtes Auswechseln des Kotflügels erlauben. Eine Eigenart der aus Kunststoff hergestellten Kotflügel besteht darin, daß sie sich bei Erwärmung wesentlich stärker ausdehnen als ihre Pendants aus Stahlblech.

Damit die Wärmeausdehnung bei Kunststoff-Kotflügeln nicht zu Verspannungen und unerwünschten Verformungen führt, hat man die Verbindung zwischen dem Kotflügel und der Karosserie so ausgeführt, daß sich der Kotflügel relativ zur Karosserie verschieben kann. Die Befestigungen des Kotflügels mit der Karosserie sind deshalb so ausgestaltet, daß eine Seite starr an der Karosserie fixiert ist, während die anderen Seiten verschiebbar geführt sind. Eine solche Befestigung kann in der Weise ausgestaltet sein, daß die Aussparungen zum Hindurchführen der Schrauben in dem Kotflügel gegenüber dem Schaftdurchmesser der Schrauben vergrößert oder als Langloch ausgeführt sind. In der Praxis hat man meist die der Fahrzeugtüre zugewandte Seite des Kotflügels starr befestigt, so daß die Ausdehnung des länglich gestalteten Kotflügels nur in Richtung von der Seitentüre weg nach vorne bzw. nach hinten möglich ist. In diese Richtung erstrecken sich demnach auch die Langlöcher zur Durchführung der Schrauben im oberen Randbereich des Kotflügels. Analog dazu müssen auch die Befestigungsöffnungen in dem der Türe abgewandten Bereich des Kotflügels, bei einem vorderen Kotflügel der vordere Randbereich, ausgestaltet sein. Während die verschiebbare Festlegung des oberen Randbereiches des Kotflügels keine weiteren Probleme nach sich zieht, da der Spalt zwischen dem Kotflügel und einer sich daran zur Fahrzeugmitte anschließenden Klappe in etwa gleich bleibt, macht in der Praxis die Verschiebung des vorderen Randbereiches (hier und auch für die nachfolgende Beschreibung wird stets von einem vorderen Kotflügel ausgegangen) mehr Schwierigkeiten. An den vorderen Randbereichen des Kotflügels schließen sich nämlich mehrere Bauteile, beispielsweise ein Frontteil und ein Scheinwerfer, an. Wenn sich nun der Kotflügel nach vorne ausdehnt, dann steht er relativ gegenüber diesen Bauteilen vor, was optisch genauso wenig ansprechend ist, wie wenn zum Ausgleich für diese Verschiebung entsprechend große Spalte vorgesehen werden.

Der Erfindung liegt die Aufgabe zugrunde, die Befestigung eines Kotflügels aus Kunststoff so auszubilden, daß die vorstehend genannten Probleme bei der thermischen Ausdehnung des Kotflügels vermieden werden.

Die Aufgabe wird durch die kennzeichnenden Merkmale des Patentanspruchs 1 gelöst.

Dadurch, daß der Kotflügel durch die vorgeschlagenen Maßnahmen sowohl in seinem oberen, seinem vorderen und seinem hinteren Randbereich steif und verschiebesicher gehalten ist, können die sich an den Kotflügel anschließenden Bauteile in gleicher Weise wie bei einem Kotflügel aus Stahlblech angefügt werden.

Besondere Maßnahmen, welche die Ausdehnung des Kotflügels berücksichtigen, sind nicht erforderlich. Die Spalte zwischen dem Kotflügel und den angrenzenden Bauteilen können demnach sehr schmal gehalten sein. Da der Kotflügel in seinem oberen, seinem vorderen und seinem hinteren Randbereich steif und verschiebesicher an der Karosserie des Kraftfahrzeuges gehalten ist, kann er sich bei der gegebenen Festlegung und seiner Form nur nach außen beulen. Dieser Effekt ist mit dem Auge kaum wahrnehmbar oder - wenn aufgrund der hohen Temperatur eine starke Beulung auftritt - nicht störend, da die Beulung gleichmäßig erfolgt.

Zur verschiebesicheren Befestigung werden zumindest abschnittsweise zwischen den Köpfen der Schrauben und dem Kotflügel Unterlegscheiben angeordnet, welche mit mindestens einer, auf den Kotflügel einwirkenden, kugelkalottenförmigen Einprägung versehen sind. Diese Ausgestaltung hat den großen Vorteil, daß ohne Kerbwirkung ein die Verschiebung verhindernder Formschluß erzeugt wird. Beim Anziehen der Schrauben drücken sich nämlich die kugelkalottenförmigen Vorsprünge in den Kunststoff-Kotflügel hinein, wodurch die gewünschte formschlüssige Verbindung erzeugt wird.

Die der Erfindung zugrundeliegende Aufgabe kann auch dadurch gelöst werden, wenn der Befestigungsflansch des Kotflügels in eine Stahlschiene eingebettet ist. Der angesprochene Befestigungsflansch findet sich auch bei herkömmlichen Kotflügeln aus Stahlblech und dient dazu, den Kotflügel an der Anschraubbank der Karosserie zu befestigen. Ein Kunststoff-Kotflügel könnte also in seinem Aufbau wie ein Kotflügel aus Stahlblech ausgeführt sein. Die in dem Befestigungsflansch eingebettete Stahlschiene macht den Anschraubbereich sehr steif und sorgt in Verbindung mit den durch den Befestigungsflansch hindurchgeführten Schrauben dafür, daß in diesem Bereich keine Verschiebung auftritt.

Anstelle der in dem Befestigungsflansch eingebetteten Stahlschiene ist es natürlich auch möglich, eine solche Stahlschiene auf einer oder beiden Seiten des Befestigungsflansches anzuordnen. Entscheidend ist, daß die Stahlschienen mit dem Befestigungsflansch fest verbunden sind, was beispielsweise durch Verkleben der Stahlschienen mit dem Befestigungsflansch geschehen kann. Diese Ausgestaltung vermeidet das Einlegen eines Stahlteiles bei der Herstellung des Kotflügels, stellt jedoch in gleicher Weise eine steife und verschiebesichere Befestigung des Kotflügels an der Karosserie sicher.

Schließlich kann der Kotflügel einen Befestigungsflansch aufweisen, welcher in ein separates Halteteil aus relativ steifem Material eingebettet ist. Eine solche Befestigungsart bietet sich an, wenn entweder herstellungstechnisch oder aufgrund der baulichen Gegebenheiten der Kotflügel nicht unmittelbar über den Befestigungsflansch an der Karosserie befestigbar ist. Eine solche Befestigungssituation kann sich etwa im hinteren Bereich des vorderen Kotflügels ergeben, wo dieser an dem vorderen Pfosten, dem sog. A-Pfosten, zu befestigen ist. Es versteht sich von selbst, daß das Halteteil zur Verhinderung der Verschiebung des Kotflügels bei seiner thermischen Ausdehnung nicht nur steif und verschiebesicher an dem Befestigungsflansch des Kotflügels fixiert sein muß, sondern daß es auch selbst eine ausreichende Steifigkeit aufweist. Dies kann beispielsweise durch Rippen oder ähnliche Maßnahmen sichergestellt sein.
Mehrere Ausführungsbeispiele der Erfindung sind in der Zeichnung dargestellt und werden nachfolgend näher beschrieben. Es zeigt
- Fig. 1: in Seitenansicht den vorderen linken Kotflügel eines Personenkraftwagens,
- Fig. 2: den Kotflügel aus Fig. 1 in Draufsicht,
- Fig. 3: die Befestigung des Kotflügels an der Karosserie des Personenkraftwagens,
- Fig. 4: eine Befestigungsvariante mit einer eingelegten Stahlschiene,
- Fig. 5: eine Befestigung ähnlich der Befestigung gemäß Fig. 4, jedoch mit durch Klebung angefügten Stahlschienen und
- Fig. 6: die Befestigung des Kotflügels mittels eines separaten Befestigungsteiles.

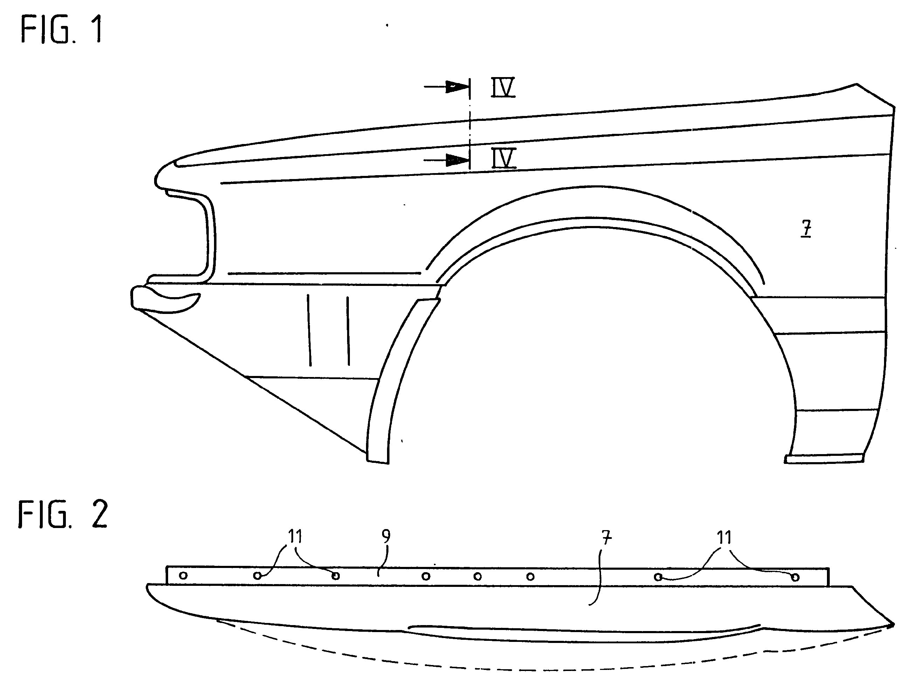

Die Figuren 1 und 2 zeigen den linken vorderen Kotflügel 7 eines Personenkraftwagens in zwei Ansichten. Der Kotflügel 7 ist in seinem oberen Randbereich mit einem Befestigungsflansch 9 versehen, welcher Bohrungen 11 aufweist.

Der Kotflügel 7 wird in der Weise an der Karosserie des Personenkraftwagens befestigt, daß sowohl sein oberer, sein vorderer und auch sein hinterer Randbereich steif und verschiebesicher an der Karosserie gehalten sind.

Diese Befestigungsart bedingt, daß sich der Kotflügel 7 bei Erwärmung nach außen beult, was in Fig. 2 übertrieben strichpunktiert dargestellt ist.

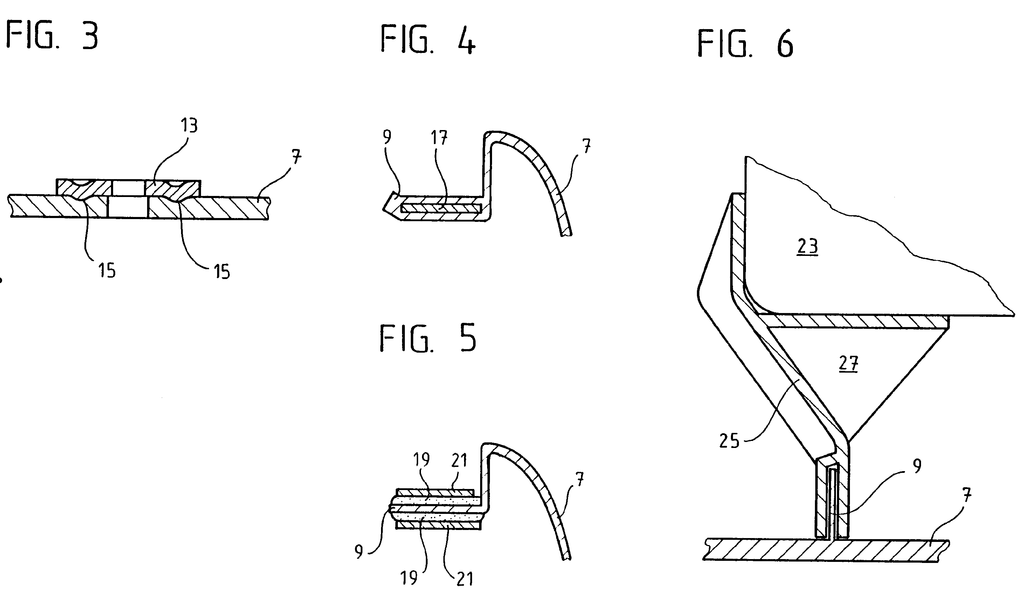

Mehrere Befestigungsarten des Kotflügels 7 an der Karosserie sind in den Figuren 3 bis 6 dargestellt. Fig. 3 zeigt eine Unterlegscheibe 13, welche mit kalottenförmigen Einprägungen 15 versehen ist. Wird die Unterlegscheibe 13 zur Befestigung des Kotflügels 7 mit einer Schraube (nicht dargestellt) angepreßt, dann drücken sich die Einprägungen 15 in den Kotflügel 7 ein, wodurch ein die Verschiebung des Kotflügels vor hindernder Formschluß erreicht wird. Durch die Form der Einprägungen 15 tritt keine Kerbwirkung ein.

Fig. 4 zeigt einen Schnitt gemäß der Linie IV-IV in Fig. 1. In dem Befestigungsflansch 9 ist eine Stahlschiene 17 eingebettet, wodurch eine steife und verschiebesichere Befestigung des Kotflügels 7 über die Bohrungen 11 sichergestellt ist.

Eine abgewandelte Bauform zeigt Fig. 5. Dort ist der Befestigungsflansch 9 in normaler Materialstärke ausgeführt. Zu beiden Seiten des Befestigungsflansches 9 sind mittels eines Klebers 19 Stahlschienen 21 angefügt, welche die gleiche Funktion wie die Stahlschiene 17 gemäß Fig. 4 aufweisen. Der Unterschied besteht nur darin, daß bei der letztgenannten Bauform bei der Herstellung des Kotflügels 7 die Stahlschiene nicht eingelegt werden muß, sondern nachträglich angefügt werden kann.

Eine letzte Befestigungsart ist Gegenstand der Fig. 6. In der dort gezeigten Weise kann beispielsweise der hintere Randbereirh des Kotflügels an der vorderen Türsäule 23 der Karosserie des Personenkraftwagens befestigt sein. Auch hier ist wiederum an dem Kotflügel ein Befestigungsflansch 9 ausgebildet. Dieser wird auf beiden Seiten durch ein Halteteil 25 übergriffen. Die Verbindung zwischen Befestigungflansch 9 und Halteteil 25 erfolgt zweckmäßig durch Kleben. Von diesem Anschlußbereich ist das Halteteil 25 zur Türsäule 23 geführt, deren Form das Halteteil 25 angepaßt ist. Zur Verstärkung des schienenförmigen Halteteiles 25 ist dieses abschnittsweise mit Rippen 27 versehen.

## Patentansprüche

1. Kotflügel aus Kunststoff für Kraftfahrzeuge, welcher durch Schrauben in seinem oberen, in einem vorderen und einem rückwärtigen Bereich mit der Karosserie des Kraftfahrzeuges verbunden ist, dadurch gekennzeichnet, daß zur steifen und verschiebesicheren Befestigung des Kotflügels (7) zumindest abschnittsweise zwischen den Köpfen der Schrauben und dem Kotflügel (7) Unterlegscheiben (13) angeordnet sind, welche mit mindestens einer, auf den Kotflügel (7) einwirkenden, kugelkalottenförmigen Einprägung (15) versehen sind.

2. Kotflügel mit einem Befestigungsflansch nach dem Oberbegriff des Anspruchs 1, dadurch gekennzeichnet, daß in den Befestigungsflansch (9) eine Stahlschiene (17) eingebettet ist.

3. Kotflügel mit einem Befestigungsflansch nach dem Oberbegriff des Anspruchs 1, dadurch gekennzeichnet, daß auf einer oder beiden Seiten des Befestigungsflansches (9) eine Stahlschiene (21) durch Klebung befestigt ist.

4. Kotflügel mit einem Befestigungflansch nach dem Oberbegriff des Anspruchs 1, dadurch gekennzeichnet, daß der Befestigungsflansch (9) in ein separates Halteteil (25) aus relativ steifem Material eingebettet ist.

## Claims

1. Wing made of plastic for motor vehicles, said wing being connected by fasteners in its upper, front and rear area to the motor vehicle body, characterised in that to attach the wing (7) in a rigid and non-displaceable manner there are arranged washers (13) at least section by section between the fastener heads and the wing (7), said washers (13) being provided with at least one spherical-ball-shaped indentation (15) which acts upon the wing (7).

2. Wing having a fixing flange according to the preamble of claim 1, characterised in that a steel rail (17) is embedded in the fixing flange (9).

3. Wing having a fixing flange according to the preamble of claim 1, characterised in that a steel rail (21) is fastened on one or both sides of the fixing flange (9) by adhesive bonding.

4. Wing having a fixing flange according to the preamble of claim 1, characterised in that the fixing flange (9) is embedded in a separate retainer (25) made of comparatively rigid material.

## Revendications

1. Aile en matière plastique pour véhicules automobiles, qui est reliée par des vis à la carrosserie du véhicule dans sa partie supérieure, dans une partie avant et dans une partie arrière, caractérisée en ce que, pour la fixation rigide et sans risque de déplacement de l'aile (7), il est disposé, au moins par endroits, entre les têtes des vis et l'aile (7), des rondelles (13) qui sont munies d'au moins une empreinte en forme de calotte sphérique (15) qui s'encastre dans l'aile (7).

2. Aile munie d'un rebord de fixation selon le préambule de la revendication 1, caractérisée en ce qu'un rail en acier (17) est noyé dans le rebord de fixation (9).

3. Aile munie d'un rebord de fixation selon le préambule de la revendication 1, caractérisée en ce qu'un rail en acier (21) est fixé par collage sur une face ou sur les deux faces du rebord de fixation (9).

4. Aile munie d'un rebord de fixation selon le préambule de la revendication 1, caractérisée en ce que le rebord de fixation (9) est inséré dans une pièce de maintien séparée (25) en matière relativement rigide.
